# EUROPEAN PATENT APPLICATION

(11) **EP 1 006 736 A1**
(43) Date of publication of application: **07.06.2000**
(21) Application number: 98122851.3
(22) Date of filing: 02.12.1998
(51) Int. Cl.: H04Q 3/00

(54) **Method and apparatus for maintaining unchanged directory numbers in a telecommunication system**

(71) Applicant: TELEFONAKTIEBOLAGET LM ERICSSON, 126 25 Stockholm (SE)
(72) Inventor: Andersen, Jan, 2860 Soborg (DK); Petersen, René, 2500 Valby (DK); Petersen, Tommy, 2620 Albertslund (DK); Sorensen, Kjeld Bo, 2600 Glostrup (DK)
(74) Representative: Roerboel, Leif

(57) **Abstract**

The invention provides a possibility for maintaining unchanged directory numbers (DN) for telecommunication system service subscribers moving to new locations or new service providers. The numbers dialled (DN) to reach the intended subscribers are correlated with numbers (RN) recognized as the new service termination locations for the subscribers and the dialled numbers (DN) are translated to the recognized numbers (RN) in the telecommunication systems in order to setup the call connections across the telecommunications network. The recognized numbers (RN) are stored at the original termination locations for the subscribers and returned in the release message or ISUP-message when accessing the original termination locations and used for re-routing the call. Preferably, local data bases are provided in order to store correlations between originally dialled numbers (DN) and the recognized numbers (RN) returned in the release messages, said local data bases serving originating subscribers without the need to set up the connection to the original termination locations. Said local data bases are queried for a correlation when setting up a call connection and possible correlations are used to set up the calls. Call connection information is automatically distributed and updated throughout the telephone network without the use of a centralized data base for storing the information.

## Description

### TECHNICAL FIELD OF THE INVENTION

The present invention relates to a method and apparatus for maintaining unchanged directory numbers for telecommunication systems service subscribers, not withstanding the subscribers moving to new locations or new service providers.

### BACKGROUND OF THE INVENTION

### Problem

When providing this function, it is necessary to supply the telecommunication system with information correlating directory numbers and new locations or new service providers, in order to be able to set up the correct routing of the calls in the network. Such information is normally stored in huge intelligent network data bases covering large areas, e.g. a whole country, which require co-ordination and administration to keep updated, leading to a complex and time-consuming administration of the subscriber data. Furthermore, the access to such data bases is time- and capacity-consuming during call set-up and may lead to unacceptable post-dial delay.

### Known solutions

Several solutions are suggested for the last-mentioned problem, primarily implementing distributed data bases in the telecommunication system. The data bases are updated from the centralized data base and contain dynamically updated information related to directory numbers frequently used by subscribers serviced by the individual data base. Examples of such solutions are described in e.g. EP-710,042-A2, GB-2,305,815-A and WO 97/33441. All these documents describe solutions to the problems related to the access to a centralized data base and solve this by providing local data bases which are first queried and if information is found, no access to the centralized data base is required. If, however, no information is present in the local data base, the centralized data base is queried and possible information is used for the call and the information is subsequently stored in the local data base, dependent on e.g. recency and frequency of usage of the information by subscribers serviced by the local data base.

None of these documents solve the problems related to the time-consuming administration and co-ordination of the updating of a centralized data base.

### SUMMARY OF THE INVENTION

It is the object of the present invention to avoid the co-ordination and administration of a centralized data base and this is achieved by a method and an apparatus, which in accordance with the invention totally eliminate the centralized data base. Instead of using the centralized data base for introduction of information correlating dialled numbers and numbers recognized by the system as the new termination locations for the intended subscribers, this information is introduced at the original termination locations related to the numbers dialled to reach the subscribers. When trying to access the original termination location, using the dialled number, the information stored is returned in a call-drop-back message or release message, in the following ISUP(integrated services digital network user part)-message. The information returned in the ISUP-message is subsequently used, by e.g. the originating exchange, to reach the intended subscriber. In this way, it is achieved that the change of location for subscribers can be communicated to the telecommunication system locally at the original location of the subscriber, thereby eliminating the need for a huge centralized data base and its time-consuming administration and co-ordination for keeping updated.

In accordance with a further aspect of the invention, local data bases servicing individual or groups of calling subscribers are provided for selectively storing information received in ISUP-messages and these local data bases are queried for correlation information to be used for setting up calls in the telecommunication system. The updating of the local data bases is performed by storing information received in ISUP-messages, preferably dependent on recency and possibly frequency of usage of the information, in such a way that less recent or less frequently used information is deleted from storage, when necessary, to give space for storing received new information.

The local data bases may be provided in different positions in the telecommunication system, e.g.
a) in a line interface for one single subscriber, whereby the local data base will be storing information for numbers usually dialled by that subscriber,
b) in an exchange serving a group of subscribers, storing information for numbers usually dialled by the subscribers served by that exchange,
c) in a transit exchange serving a group of exchanges, storing information for numbers usually dialled by subscribers in exchanges served by that transit exchange, and
d) in a gateway exchange connecting to other networks, storing information for numbers usually dialled from those other networks.

### SHORT DESCRIPTION OF THE DRAWINGS

In the following detailed portion of the present description, the present invention will be explained in more detail with reference to an exemplary embodiment thereof illustrated in the drawing, in which
Figure 1 schematically illustrates a call set-up in a telephone system using the method in accordance with the invention in a situation, in which the called subscriber has moved to another exchange, i.e. is ported,
Figure 2 schematically shows the timing of the messages used in the call set-up in Figure 1, and
Figure 3 is a flow diagram for a call set-up procedure in accordance with the invention.

### DESCRIPTION OF PREFERRED EMBODIMENTS

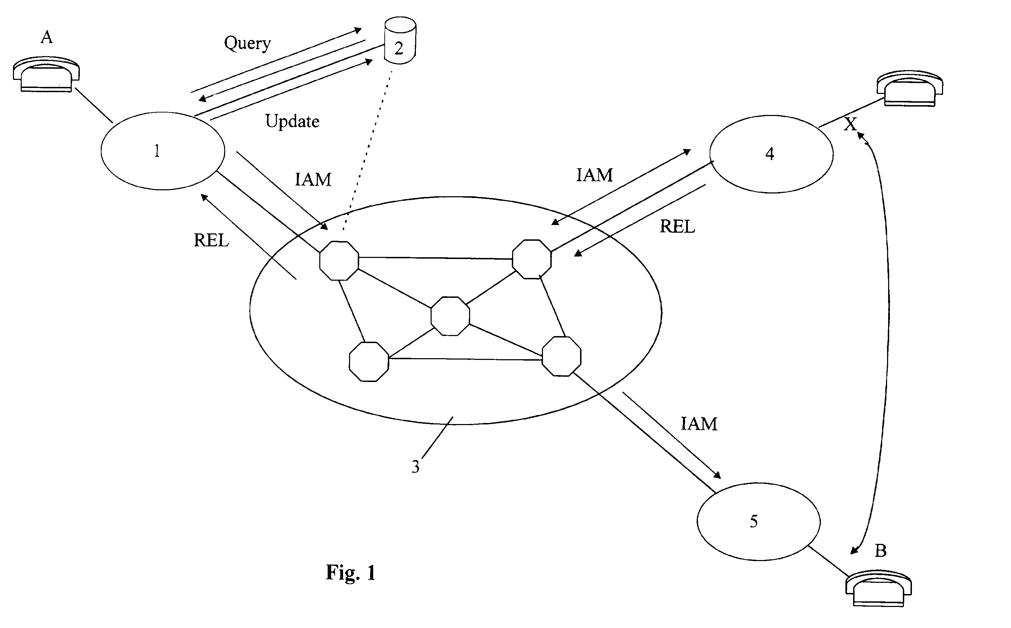

The call set-up illustrated in Figure 1 is initiated by a subscriber A connected to the originating exchange 1. When receiving the call, the originating exchange interrogates its local data base 2 for routing information. In the illustrated situation no routing information connected to the dialled number DN is found in the local data base 2 and a call is initiated towards the destination derived from the dialled number DN, sending an IAM towards the network 3. In the destination exchange, or donor exchange 4, receiving the IAM it is determined that the called subscriber B is ported to another exchange, the recipient exchange 5. A release message REL is returned towards the originating exchange 1, said message comprising routing information RN for the new destination, i.e. the recipient exchange 5. In the originating exchange this routing information returned in the release message is stored in the local data base 2 and re-routing of the call is performed to the recipient exchange 5, using the received routing information RN. Succeeding calls to the ported subscriber will be directed to the recipient exchange as long as the routing information is stored in the local data base, which is interrogated each time a new call is received.

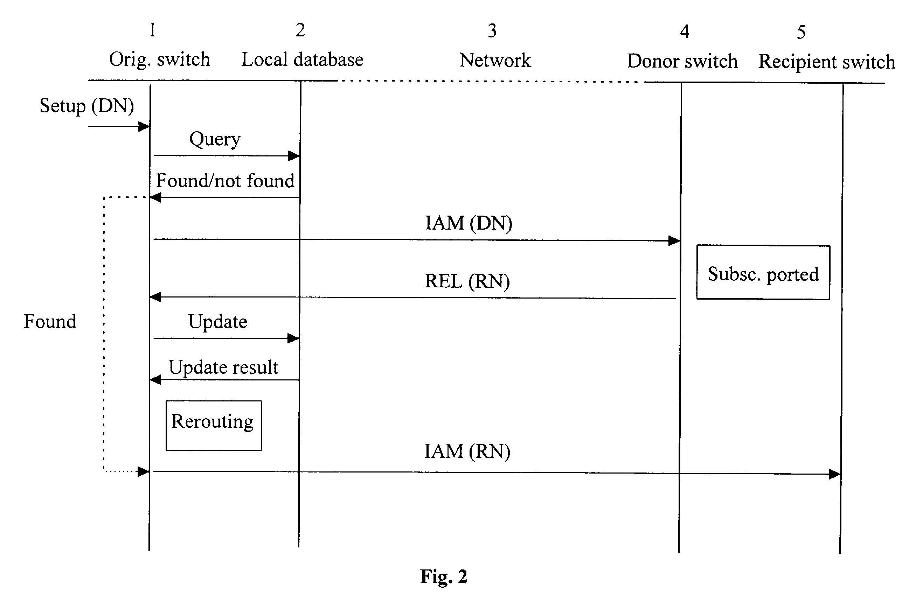

In Figure 2, the timing of the messages and source and destination of the messages are more clearly indicated. When a subscriber connected to the originating exchange dials a number, the originating exchange initiates the set-up of a call in accordance with the dialled number DN. The set-up of a call initiates a query to the local data base 2 for possibly present routing information correlated to the dialled number DN. If such routing information is found this is returned to the originating exchange and used for routing the call towards the intended destination, as illustrated by the broken line and arrow. If no routing information is stored in the local data base, the originating exchange is informed that no such information is present and the originating exchange initiates the call towards the intended destination in accordance with the dialled number DN, sending an IAM towards the destination exchange, in Figure 2 named donor exchange. The donor exchange receiving the IAM determines that the called subscriber is ported to another exchange in Figure 2 called the recipient exchange. Accordingly, the donor exchange sends a release message back to the originating exchange 1, said release message comprising routing information RN for the new destination, i.e. the recipient exchange 5. In the originating exchange the routing information returned in the release message is used to update the local data base and the originating exchange receives information regarding the result of this updating of the local data base. Irrespective of the result of the updating of the local data base, the returned routing information is used in the originating exchange for re-routing the call sending a new IAM towards the recipient exchange, whereby the call reaches the intended subscriber.

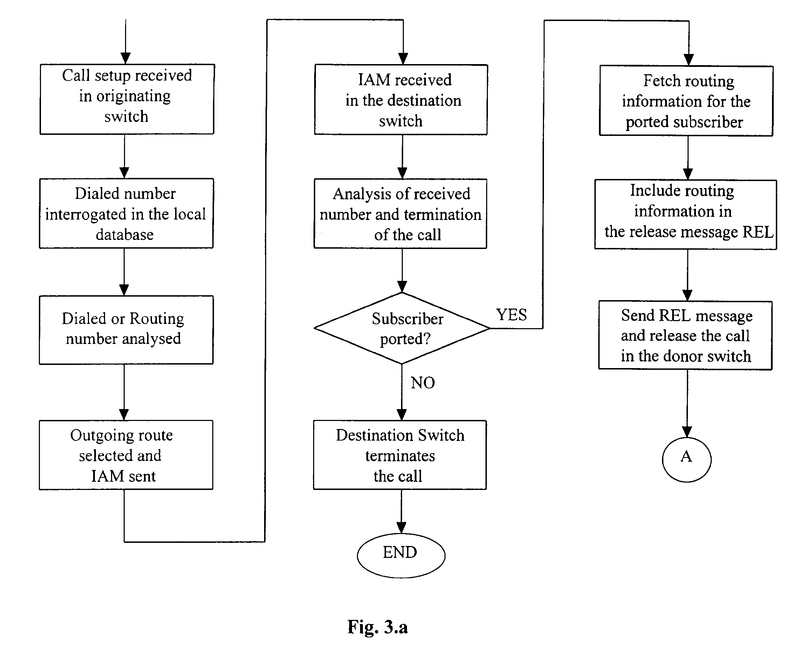

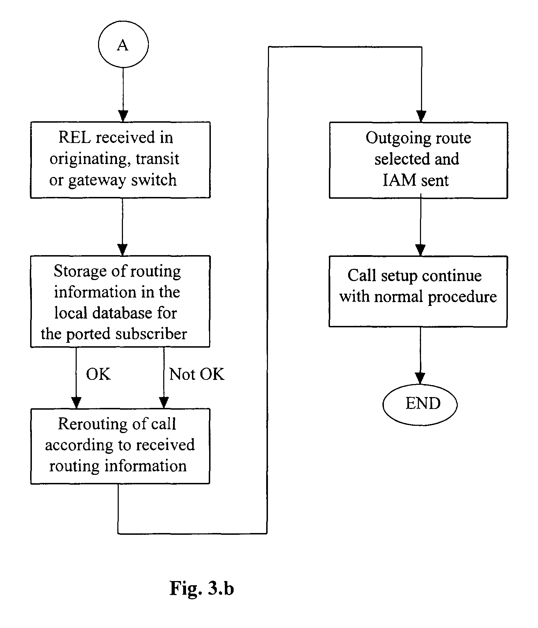

Figure 3 shows a flow diagram for setting up a call in a telephone system as shown e.g. in Figure 1. From the start, a call set-up is received in the originating exchange from a subscriber A dialling a telephone number DN. The dialled number is interrogated in the local data base in order to receive possibly stored routing information related to the dialled number. The dialled number or the routing number is then analysed in order to select an outgoing route, and an initial address message IAM is sent towards the destination exchange via the telephone network. The IAM is received in the destination exchange and analysed for detecting possible indication regarding porting of the subscriber. If this subscriber is not ported, the destination exchange terminates the call in the ordinary way and the call set-up procedure is ended. If the subscriber is ported the destination exchange is not the actual destination exchange but a donor exchange and routing information is fetched for the ported subscriber and included in a release message sent back towards the originating exchange and the call is released in the donor exchange. When the release message is received in the originating exchange, a transit exchange or a gateway exchange, comprising means for storing routing information in a local data base for ported subscriber numbers, the routing information is stored in said local data base. After this, the call is re-routed in accordance with the routing information received in the release message from the donor exchange and an outgoing route is selected in accordance with the routing information and an IAM is sent and the call set-up continues in accordance with the normal procedure.

As can be seen, the invention provides a cost efficient, network-capacity saving function and provides an automatical updating of the local data bases without manual intervention. The operator needs only to define the subscriber number as ported in the donor exchange and to insert a routing number, to be used in order to reach the intended subscriber. This information is sent back to the originating exchange where the local data base is automatically updated so that successive calls towards the ported subscriber will automatically be routed correctly in accordance with the information stored in the local data base.

The local data bases are automatically updated based on signalling information sent in ISUP-messages or relase messages and no central data base is needed in order to administrate the information regarding ported numbers.

The local data base may be located in different positions in the system such as in the line interface for individual subscribers, in local exchanges, in transit exchanges or in gateway exchanges.

## Claims

1. Method of maintaining unchanged directory numbers (DN) for telecommunication systems service subscribers moving to new locations or new service providers, comprising
- correlating numbers dialled (DN) to reach the intended subscribers with numbers (RN) recognized as the new service termination locations for the subscribers, and
- translating within the telecommunication system from the dialled numbers (DN) to the recognized numbers (RN) in setting up the call connections across the telecommunications network, **characterized** by further comprising:
- storing the recognized numbers (RN) at the original termination locations for the subscribers,
- returning the recognized numbers (RN) in the ISUP-message, when accessing the original termination locations, and
- using the returned recognized numbers (RN) to set up the call connections.

2. Method in accordance with claim 1, **characterized** by further comprising:
- selectively storing the correlations between the origianlly dialled numbers (DN) and the recognized numbers (RN) returned in the ISUP-messages, in a local data base in an exchange serving the originating subscriber, and
- querying said data base for a correlation, when setting up a call connection through said exchange and using such correlation, if found, to set up the call using the correlated recognized number (RN).

3. Method in accordance with claim 2, **characterized** by the selective storing of the correlations between originally dialled numbers (DN) and recognized numbers (RN) being performed in dependence on recency and possibly frequency of usage of the correlations.

4. Method in accordance with claim 2 or 3, **characterized** by the local data bases being positioned in one of any of the following places in the system:
a) the line interface for an originating subscriber,
b) the local exchange serving the originating subscriber,
c) a transit exchange, or
d) a gateway exchange.

5. Apparatus in a telecommunication system for providing maintenance of unchanged directory numbers (DN) for telecommunication system service subscribers moving to new locations or new service providers, **characterized** by comprising
- means at the original termination locations for storing information about new termination locations,
- means responsive to a call directed toward the original termination location and returning the stored information about the new termination location in an ISUP-message, and
- means responsive to receipt of said ISUP-message, including the information of the new termination location, and implementing a call using said information.

6. Apparatus in accordance with claim 5, **characterized** by further comprising
- data base means for storing correlations between original termination location related dialled numbers (DN) and corresponding new termination location related numbers (RN) returned in ISUP-messages, and
- means responsive to received dialled numbers (DN) for querying said data base means for corresponding correlation information,
- means for implementing a call utilizing the information received from said data base, if found.

7. Apparatus in accordance with claim 6, **characterized** by said data base means comprising
- means for hierarchically ranking stored correlation information based on recency and possibly frequency of usage of the information, and
- means for storing new information and delete information from storage with lowest ranking, when limitations of storage capacity is reached.

8. Apparatus in accordance with claim 6 or 7, **characterized** by the data base means being provided in any of the following positions:
a) the line interface for an originating subscriber,
b) the local exchange serving the originating subscriber,
c) a transit exchange, or
d) a gateway exchange.
